# EUROPÄISCHE PATENTSCHRIFT

(11) **EP 3 237 241 B1**
(45) Veröffentlichungstag und Bekanntmachung des Hinweises auf die Patenterteilung: **05.06.2024**
(21) Anmeldenummer: 15794919.9
(22) Anmeldetag: 16.11.2015
(51) Int. Cl.: B60G 9/00, B60G 7/00

(54) **VERBUND AUS EINEM ACHSLENKER UND EINEM ACHSROHR SOWIE VERFAHREN ZUR HERSTELLUNG EINES AN EINEM ACHSROHR FESTGELEGTEN ACHSLENKERS.**
COMBINATION OF AN AXLE ARM AND AN AXLE TUBE, AND METHOD FOR PRODUCING AN AXLE ARM FIXED TO AN AXLE TUBE.
COMBINAISON D'UN BRAS DE SUSPENSION ET D'UN TUBE D'ESSIEU, ET PROCÉDÉ DE FABRICATION D'UN BRAS DE SUSPENSION FIXÉ À UN TUBE D'ESSIEU.

(30) Priorität: 25.11.2014 DE 102014117207
(43) Veröffentlichungstag der Anmeldung: 01.11.2017
(73) Patentinhaber: SAF-HOLLAND GmbH, 63856 Bessenbach (DE)
(72) Erfinder: GALAZIN, Gregory, Muskegon, Michigan 49445 (US)
(74) Vertreter: Müller Schupfner & Partner Patent- und Rechtsanwaltspartnerschaft mbB (Muc)
(86) Internationale Anmeldenummer: PCT/EP2015/076657
(87) Internationale Veröffentlichungsnummer: WO 2016/083174

(56) Entgegenhaltungen:
- WO-A1-00/01548
- DE-A1-102011 086 481
- NZ-A- 534 506
- US-A1- 2003 067 134
- US-A1- 2004 080 132
- US-A1- 2009 212 523

## Beschreibung

Die vorliegende Erfindung betrifft einen Verbund aus einem Achslenker und einem Achsrohr, insbesondere zum Einsatz in Nutzfahrzeugen, sowie ein Verfahren zur Herstellung eines an einem Achsrohr festgelegten Achslenkers.

Achslenker sind aus dem Stand der Technik bereits bekannt. Es wurden in der Vergangenheit zahlreiche Versuche unternommen, die Herstellung von Achslenkern zu vereinfachen und dabei gleichzeitig deren Gewicht und Lebensdauer zu optimieren. So werden Achslenker insbesondere häufig als Gussteile ausgeführt, welche über verschiedene Verbindungselemente mit der starren Achse eines Nutzfahrzeuges verbindbar sind. Bei den aus dem Stand der Technik bekannten Achslenkern ist jedoch die Fertigung weiterhin äußerst aufwendig und es gibt nur wenige Bereiche, in denen Gewicht an den Achslenkern tatsächlich eingespart werden kann. Weiterhin hat es sich gezeigt, dass mehrteilig ausgebildete Achslenker meist nur wenige Teile mit größeren oder kleineren Ausführungsformen gemein haben und somit eine zu geringe Standardisierung bestimmter Bauteile möglich ist.

Die NZ 534506 A und WO 00/01548 A1 betreffen Achslenker zur Festlegung an einem Achsrohr eines Nutzfahrzeugs, wobei der Achslenker schwenkbar an einem Rahmen eines Nutzfahrzeugs anordenbar ist und wobei das Achsrohr über eine mittelbare oder unmittelbare Schweißverbindung mit dem Längslenker verbunden ist.

Die US-2009/0212523 A1, US-2004/0080132 A1 und US-2003/0067134 A1 betreffen Achslenker von Nutzfahrzeugen, welche an einem Ende schwenkbar an einem Lagerbock eines Nutzfahrzeugs anordenbar sind und an dem gegenüberliegenden Ende über eine Luftfeder am Rahmen des Nutzfahrzeugs abstützbar sind, wobei zwischen den beiden Enden eine Fahrzeugachse angeordnet ist.

Die vorliegende Erfindung erachtet es als ihre Aufgabe, einen Verbund aus einem Achslenker und einem Achsrohr bereitzustellen, welcher besonders einfach zu fertigen ist und eine Gewichtsreduzierung erlaubt, die Lebensdauer erhöht, und möglichst universell einsetzbare Bauteile verwendet. Weiterhin ist es Aufgabe der vorliegenden Erfindung, ein Verfahren zur Herstellung eines diese Aufgabe lösenden Verbunds anzugeben.

Diese Aufgaben werden gelöst mit einem Verbund aus einem Achslenker und einem Achsrohr gemäß Anspruch 1 sowie einem Verfahren zur Herstellung eines an einem Achsrohr festgelegten Achslenkers gemäß Anspruch 14. Bevorzugte Merkmale ergeben sich aus den anhängigen Ansprüchen.

Erfindungsgemäß ist ein Verbund aus einem Achslenker und einem Achsrohr eines Nutzfahrzeuges vorgesehen, welcher ein Verbindungselement und zumindest ein Lenkerelement umfasst, wobei das Verbindungselement einen ersten Verbindungsabschnitt aufweist, in welchem eine Schweißverbindung zum Lenkerelement herstellbar oder hergestellt ist, wobei das Verbindungselement einen zweiten Verbindungsabschnitt aufweist, in dem eine Schweißverbindung zu einem Achsrohr herstellbar oder hergestellt ist, wobei der zweite Verbindungsabschnitt ausgelegt ist, das Achsrohr zu umgreifen. Der Achslenker ist vorzugsweise der Längslenker des Fahrwerks eines Nutzfahrzeuges, welcher schwenkbar am Rahmen aufgehängt ist und zur Lagerung eines Achsrohres dient, welches wiederum zur drehbaren Lagerung eines Rades des Nutzfahrzeuges dient. Der Achslenker umfasst dabei vorzugsweise einen Bereich für eine schwenkbare Lagerung, besonders bevorzugt ein Lagerauge, und einen Bereich zur Festlegung des Achsrohres am Achslenker. Das Verbindungselement und das Lenkerelement sind vorzugsweise Teile des Achslenkers, die eine besonders einfache Fertigung des Achslenkers ermöglichen. Dabei weist das Verbindungselement einen ersten Verbindungsabschnitt auf, in welchem eine Schweißverbindung zum Lenkelement herstellbar ist, oder vorzugsweise hergestellt ist. Erfindungsgemäß befindet sich der erste Verbindungsabschnitt des Verbindungselements in einem sich plattenförmig und im Wesentlichen eben erstreckenden Bereich des Verbindungselements. Erfindungsgemäß erstreckt sich der erste Verbindungsabschnitt zwischen dem Anschlussbereich am Rahmen und der Rohrachse bzw. von diesem Anschlussbereich am Rahmen bis hin zur Rohrachse. Als Anschlussbereich wird bevorzugt eine als Lagerauge ausgebildete Aufnahmegeometrie des Achslenkers zur schwenkbaren Lagerung des Achslenkers an einem Rahmen des Fahrzeuges definiert. Weiterhin weist das Verbindungselement einen zweiten Verbindungsabschnitt auf, in welchem eine Schweißverbindung zu einem Achsrohr herstellbar ist, wobei der zweite Verbindungsabschnitt vorzugsweise räumlich beabstandet vom ersten Verbindungsabschnitt des Lenkerelements vorgesehen ist. Neben der Auslegung des zweiten Verbindungsabschnitts für die Herstellung einer Schweißverbindung mit dem Achsrohr, ist der zweite Verbindungsabschnitt derart ausgelegt, dass er das Achsrohr umgreift. Dabei ist ein vollständiges oder annähernd vollständiges bzw. überwiegendes Umgreifen des Achsrohres bevorzugt. Mit anderen Worten ist der zweite Verbindungsabschnitt vorzugsweise derart ausgelegt, dass er das Achsrohr um die Rohrachse umgreift oder umrundet. Die Rohrachse ist dabei vorzugsweise die Symmetrieachse des Achsrohres oder besonders bevorzugt die Achse, um welche ein Rad am Achsrohr drehbar gelagert ist. Dabei ist der zweite Verbindungsabschnitt des Verbindungselements vorzugsweise zumindest bereichsweise kreis- oder ringförmig ausgebildet. Insbesondere bevorzugt ist es, dass der zweite Verbindungsabschnitt an die Außengeometrie des Achsrohres angepasst ist. Ist also das Achsrohr beispielsweise rechteckförmig oder gerundet rechteckförmig, so weist der zweite Verbindungsabschnitt vorzugsweise ebenfalls eine rechteck- oder rechteckähnliche Innenkonfiguration auf. Ist das Achsrohr zylinderförmig ausgebildet, so ist der zweite Verbindungsabschnitt vorzugsweise ringförmig ausgebildet. Das Lenkerelement ist vorzugsweise ein im Wesentlichen blechartiges Erzeugnis, welches insbesondere bevorzugt als Halbzeug ausgebildet ist und bereits wesentliche Geometriemerkmale des Achslenkers enthält. So weist das Lenkerelement vorzugsweise einen Anschlussbereich zur drehbaren Lagerung am Rahmen auf, in welchem entweder das Lenkerelement selbst über ein Lagerelement drehbar am Rahmen des Nutzfahrzeuges lagerbar ist, oder über ein zwischengeschaltetes Buchsenelement. Besonders bevorzugt ist das Lenkerelement als einstückiges Gussteil, oder als Schmiedeteil ausgebildet. Schmiedeteile haben den Vorteil, dass sie aufgrund der umformenden Bearbeitung eine relativ hohe Festigkeit aufweisen, wobei das Gewicht bei diesen Teilen relativ gering ist. Vorteilhaft an der Auslegung des Achslenkers mit einem Verbindungselement und einem Lenkerelement ist, dass insbesondere bevorzugt die tragenden Strukturen des Achslenkers optimal auf das Verbindungselement und das Lenkerelement verteilt werden können, wobei insbesondere eine hohe Festigkeit bei gleichzeitig geringem Gewicht erreichbar ist. Weiterhin ist die Fertigung des Achslenkers deutlich vereinfacht, da in einem ersten Schritt eine Schweißverbindung zwischen dem Verbindungselement und dem Lenkerelement herstellbar ist, anschließend das Achsrohr im zweiten Verbindungsabschnitt des Verbindungselements anordenbar und an diesem festschweißbar ist. Dabei ist das Achsrohr insbesondere durch das Verbindungselement gehalten, wodurch sich die Handhabung des Achsrohres und des Achslenkers deutlich vereinfacht.

Vorzugsweise weist das Verbindungselement im zweiten Verbindungsabschnitt ein Schweißfenster auf, welches als Aussparung ausgebildet ist und in welchem die Schweißverbindung zwischen dem Verbindungselement und dem Achsrohr herstellbar ist. Das Schweißfenster ist vorzugsweise derart als Aussparung im zweiten Verbindungsabschnitt ausgebildet, dass entlang des inneren Randes Schweißfensters eine Schweißnaht zwischen diesem inneren Rand des Schweißfensters und dem Achsrohr herstellbar ist. Besonders bevorzugt ist dabei die Schweißverbindung zwischen dem Achsrohr und dem Verbindungselement ausschließlich im Schweißfenster hergestellt. In Versuchen des Erfinders der vorliegenden Anmeldung wurde herausgefunden, dass die Festigkeit der Schweißverbindung zwischen dem Achsrohr und dem Lenkerelement respektive dem Verbindungselement besonders hohe Lebensdauer und Festigkeitswerte erzielt werden können, wenn die Schweißverbindung zwischen dem Achsrohr und dem Verbindungselement in einem Schweißfenster ausgebildet ist. Vorzugsweise ist das Schweißfenster eine im Wesentlichen ovale Öffnung im zweiten Verbindungsabschnitt des Verbindungselements, wobei die Rundung des Schweißfensters besondere Vorteile bei der Herstellung der Schweißverbindung aufweist, da nicht in Ecken geschweißt werden muss und somit Kerbwirkung oder ähnliche negative Effekte vermieden werden können.

In einer erfindungsgemäßen Ausführungsform weist das Verbindungselement in einem ersten Zustand ein Übermaß bezogen auf die Außenkonfiguration des Achsrohres auf. Der erste Zustand ist vorzugsweise der Zustand des Verbindungselementes, in dem dieses noch nicht am Achsrohr festgeschweißt ist. In diesem ersten Zustand weist vorzugsweise der zweite Verbindungsabschnitt des Verbindungselements ein Übermaß bezogen auf die Außenkonfiguration des Achsrohres auf, mit anderen Worten kann das Achsrohr mit einem gewissen Spiel in den zweiten Verbindungsbereich eingeführt werden. Besonders bevorzugt ist der zweite Verbindungsbereich des Verbindungselements elastisch oder rückstellfähig verformbar ausgeführt, so dass er durch Anlegen einer Kraft gegen das Achsrohr gezwungen werden kann. Das Übermaß des zweiten Verbindungsabschnitts gegenüber der Außenkonfiguration oder der äußeren Fläche des Achsrohres ist vorzugsweise derart ausgelegt, dass das Achsrohr von einem Konstrukteur oder Anwender des Achslenkers in den zweiten Verbindungsabschnitt per Hand eingesetzt werden kann. Ein Aufweiten der Achsöffnung am Lenkerelement durch Erhitzen oder größere Kräfte zur Überwindung von Reibung zwischen Lenkerelement und Achsrohr sind dabei nicht nötig.

Gemäß der Erfindung weist das Verbindungselement im ersten Zustand eine erste Querschnittsfläche des vom zweiten Verbindungsabschnitt umgriffenen Volumens auf, welche vorzugsweise ein 1,02 - 1,3-faches, bevorzugt ein 1,05 - 1,15-faches und besonders bevorzugt ein 1,1 - 1,15-faches einer zweiten Querschnittsfläche der Außenkonfiguration des Achsrohres im Bereich des zweiten Verbindungsabschnittes ist. Besonders bevorzugt ist es hierbei, dass die maximale Erstreckung der Außenkonfiguration des Außenrohres kleiner ist, als die minimale Erstreckung des zweiten Verbindungsabschnitts im ersten Zustand des Verbindungselements. In einem weiteren bevorzugten Fall, wenn vorzugsweise das Achsrohr eine im Wesentlichen rechteckige Außenkonfiguration aufweist und auch der zweite Verbindungsabschnitt ein im Wesentlichen rechteckiges Volumen umschließt, das die Querschnittsfläche des vom zweiten Verbindungsabschnitt umschlossenen Volumens größer ist als die Querschnittsfläche des Achsrohres in diesem Bereich. Besonders bevorzugt werden hierbei die Querschnittsflächen des zweiten Verbindungsabschnitts und des Achsrohres jeweils quer, bevorzugt senkrecht, zur Rohrachse des Achsrohres gemessen. Bezogen auf das vorzugsweise am Lenkerelement festgelegte Verbindungselement wird die Querschnittsfläche des vom zweiten Verbindungsabschnitt umschlossenen Volumens vorzugsweise quer zu der Schwenkachse bestimmt, um welche schwenkbar das Lenkerelement am Rahmen eines Nutzfahrzeuges festlegbar ist. Hieraus ergibt sich, dass die Schwenkachse des Lenkerelements vorzugsweise parallel zur Rohrachse des im zweiten Verbindungsabschnitt des Verbindungselements festlegbaren Achsrohres ist. Besonders bevorzugt ist der erste Zustand ein "unverspannter" Zustand des Verbindungselements, d. h. dass keine Zug oder Druckspannung am Verbindungselement anliegt welche dieses elastisch verformt.

Erfindungsgemäß weist das Verbindungselement einen Zugbereich auf, mit welchem ein Zugelement in Eingriff steht oder bringbar ist, um den zweiten Verbindungsabschnitt derart zu verengen, dass die erste Querschnittsfläche verkleinert ist. Mit anderen Worten ist erfindungsgemäß ein Zugelement vorgesehen, um den zweiten Verbindungsabschnitt zu verformen. Die Verformung des zweiten Verbindungsabschnitts ist dabei vorzugsweise eine elastische Verformung, so dass nach Lösen der durch das Zugelement aufgebrachten Kraft der zweite Verbindungsabschnitt des Verbindungselements wieder in seine Neutrallage, und das Verbindungselement somit in seinen ersten Zustand zurückfedert. Durch die Verengung der ersten Querschnittsfläche im zweiten Verbindungsabschnitt wird bevorzugt der zweite Verbindungsabschnitt gegen das im zweiten Verbindungsabschnitt anordenbare Achsrohr gezwungen. Auf diese Weise ist vorzugsweise das Achsrohr kraftschlüssig an dem Verbindungselement festlegbar.

Besonders bevorzugt überträgt das Zugelement eine Kraft auf das Verbindungselement derart, dass eine im Wesentlichen parallel zum Umfang des Achsrohres verlaufende Zugkraft im zweiten Verbindungsabschnitt wirkt. Das Zugelement ist vorzugsweise eine Schraube oder ein Bolzen, welche/r in ein Gewinde entweder am Verbindungselement selbst oder an einer zusätzlich vorgesehenen Mutter eingreift, um eine Zugkraft auf den zweiten Verbindungsabschnitt des Verbindungselements auszuüben. Vorzugsweise wirkt diese Kraft parallel zum Umfang des Achsrohres oder mit anderen Worten parallel zu einer Tangentialen an den Umfang des Achsrohres. Da auf Grund der Vorspannung und elastischen Verformung des Verbindungselements im verspannten Zustand Abweichungen von der parallel zum Umfang verlaufenden Richtungen auftreten können, ist auch eine, mit einer Winkelabweichung um 5° von der Parallelen, verlaufende Kraftrichtung als im Wesentlichen parallel anzusehen. Mit anderen Worten funktioniert der zweite Verbindungsabschnitt somit ähnlich einer aus dem Stand der Technik bekannten Rohrschelle, bei welcher durch Spannen einer Schraube der in der Rohrschelle vorgesehene Querschnitt verengt wird, wodurch die Rohrschelle gegen ein Rohr gepresst werden kann.

Ferner bevorzugt ist das Verbindungselement in einem zweiten Zustand gegenüber dem Achsrohr vorgespannt. Im zweiten Zustand ist dabei insbesondere der zweite Verbindungsabschnitts gegen das Achsrohr durch eine elastische Verformung vorgespannt. Dabei kann im zweiten Zustand das Verbindungselement im zweiten Verbindungsabschnitt zusätzlich zur Vorspannung gegen das Achsrohr auch mit dem Achsrohr verschweißt sein. Der zweite Zustand des Verbindungselements ist dabei insbesondere durch das Zugelement erzeugt, welches im Zugbereich des Verbindungselements eine Kraft auf das Verbindungselement überträgt. Die Möglichkeit der Vorspannung des zweiten Verbindungsabschnitts gegenüber dem Achsrohr erlaubt es auf einfache Weise und lösbar, eine erste Verbindung zwischen dem Verbindungselement und dem Achsrohr herzustellen, wodurch die Montage des Achsrohres am Achslenker deutlich vereinfacht wird. So kann der Anwender vor der Herstellung der Schweißverbindung zwischen dem zweiten Verbindungsabschnitt und dem Achsrohr zunächst eine kraftschlüssige Verbindung zwischen beiden Teilen herstellen, welche, falls Korrekturen der Einbaulage nötig sind, nochmals gelöst und neu wiederhergestellt werden kann.

Besonders bevorzugt ist das Verbindungselement im zweiten Zustand im Bereich des Schweißfensters mit dem Achsrohr verschweißt. Besonders bevorzugt nach Einstellen der richtigen Einbaulage des Achsrohres relativ zum Verbindungselement kann zwischen dem Achsrohr und dem Schweißfenster des zweiten Verbindungsabschnitts eine Schweißverbindung hergestellt werden. Das Verbindungselement ist in dem zweiten Zustand vorzugsweise bereits am Lenkerelement festgelegt, so dass ein festschweißendes Achsrohr am Verbindungselement gleichzeitig auch eine räumliche und örtliche Fixierung des Achsrohres bezogen auf das Lenkerelement bedeutet.

Vorzugsweise ist das Schweißfenster derart am Verbindungselement angeordnet, dass es auf einer Druckhälfte oder einer Zughälfte des Achsrohres festgelegt oder festlegbar ist. Die Druckhälfte des Achsrohres ist vorzugsweise die Seite, welche bei einer Biegung des Achsrohres im Einsatz des Nutzfahrzeuges im Bereich des Achslenkers auf Druck belastet wird. Üblicherweise ist dies die Oberseite bzw. die obere Hälfte des Achsrohres im Bereich des Achslenkers, welche im Einsatz des Nutzfahrzeuges dem Untergrund, auf dem das Nutzfahrzeug fährt, abgewandt ist. Die Zughälfte ist analog hierzu die Seite des Achsrohres, welche im Einsatz des Nutzfahrzeuges im Bereich des Achslenkers auf Zugspannung belastet wird. Besonders bevorzugt ist es, wenn das Schweißfenster am Verbindungselement derart angeordnet ist, dass es vorzugsweise vollständig auf der Druckhälfte oder vollständig auf der Zughälfte des Achsrohres am Achsrohr festlegbar ist. Durch diese bevorzugte Auslegung bzw. Anordnung des Schweißfensters können Scherspannungen in der Schweißnaht zwischen Achsrohr und Schweißfenster vermieden werden, da entweder die gesamte Schweißnaht auf Druck oder die gesamte Schweißnaht auf Zug belastet wird. Auf diese Weise lässt sich mit Vorteil die Lebensdauer der Verbindung zwischen Achslenker und Achsrohr erhöhen. Bezogen auf den Achslenker selbst bedeutet diese Anordnung des Schweißfensters vorzugsweise, dass das Schweißfenster vorzugsweise auf der Oberseite des Achslenkers angeordnet ist. Die Oberseite des Achslenkers ist vorzugsweise die Seite, die in eine Richtung weist entlang derer sich eine Luftfeder in einem Tragabschnitt des Achslenkers oder des Lenkerelements am Achslenker abstützt und eine Kraft vom Rahmen des Nutzfahrzeuges auf den Achslenker überträgt. Analog hierzu definiert sich die Unterseite des Achslenkers als die der Oberseite abgewandte Seite.

Vorzugsweise ist das Verbindungselement im zweiten Zustand im Bereich des zweiten Verbindungsabschnitts mit dem Lenkerelement verschweißt. Zusätzlich zur Festlegung des zweiten Verbindungsabschnitts im Bereich des Schweißfensters am Achsrohr ist es vorteilhaft, wenn das Verbindungselement im zweiten Verbindungsabschnitt auch mit dem Lenkerelement verschweißt ist, um die Festigkeit des Achslenkers und dessen Verbindung zum Achsrohr zu erhöhen. Die Schweißverbindung zwischen dem Lenkerelement und dem zweiten Verbindungsabschnitt ist dabei vorteilhafterweise als Punktschweißverbindung oder als Linienschweißverbindung ausgeführt. Der Vorteil einer Punktschweißverbindung ist, dass sie besonders schnell und mit geringem thermischen Einfluss auf das Gefüge im Verbindungselement und im Lenkerelement herstellbar ist. Der Vorteil einer Linienschweißverbindung ist, dass sie eine durchgehende Schweißnaht bereitstellt, welche jedoch größeren thermischen Einfluss auf das Gefüge des Verbindungselements und des Lenkerelements im Bereich der Schweißnaht hat. Je nach den erforderlichen Festigkeitswerten der Schweißverbindung wird entsprechend eine punktförmige oder eine linienförmige Schweißnaht ausgewählt.

Bevorzugt weist das Lenkerelement eine Achsöffnung auf, wobei die Achsöffnung ein Übermaß gegenüber der Außengeometrie des Achsrohrs aufweist, wobei das Achsrohr mit Spiel in die Achsöffnung einführbar ist. Die Achsöffnung im Lenkerelement ist vorzugsweise fluchtend mit dem vom zweiten Verbindungsabschnitt umschlossenen Volumen ausgerichtet. Weiterhin korrespondiert die Form der Achsöffnung im Wesentlichen mit der Außenform des Achsrohres. Vorzugsweise ist der Querschnitt der Achsöffnung gleich dem Querschnitt des vom zweiten Verbindungsabschnitt umschlossenen Volumens im ersten Zustand des Verbindungselements. Im ersten Zustand des Verbindungselements kann somit das Achsrohr sowohl durch die Achsöffnung, als auch in den zweiten Verbindungsabschnitt eingeführt werden, ohne dass es dabei zu einem Anecken kommt. Der Montageaufwand zur Herstellung der Verbindung aus Achslenker und Achsrohr ist somit deutlich vereinfacht.

In einer bevorzugten Ausführungsform umfasst das Lenkerelement ein erstes Lenkerteil und ein zweites Lenkerteil, wobei das erste und das zweite Lenkerteil an gegenüberliegenden Seiten des Verbindungselements mit diesem verschweißt oder verschweißbar sind. Mit Vorteil ist das Lenkerelement zweiteilig ausgebildet, wobei ein erstes Lenkerteil und ein zweites Lenkerteil vorzugsweise als Halbzeuge ausgebildet sind und zum Lenkerelement zusammengesetzt werden können. Die Ausbildung des Lenkerelements aus einem ersten Lenkerteil und einem zweiten Lenkerteil vereinfacht die Fertigung, da beide Lenkerteile in einfachen beispielsweise Umformverfahren hergestellt werden können und zu dem Lenkerelement zusammengesetzt werden können, wobei das Lenkerelement zumindest bereichsweise als hohlkörperförmiges Bauteil ausgebildet ist. Mit Vorteil bildet das erste Lenkerteil und das zweite Lenkerteil jeweils eine Hälfte des Lenkerelements. Dabei sind die beiden Lenkerteile vorzugsweise sowohl über das Verbindungselement und die mit diesem herstellten Schweißverbindungen, als auch bereichsweise direkt miteinander verbunden.

In einer bevorzugten Ausführungsform weist das Lenkerelement einen Tragabschnitt zur Festlegung eines Federelements auf. Der Tragabschnitt des Lenkerelements weist dabei insbesondere bevorzugt Eingriffsmittel wie beispielsweise Bohrungen auf, an denen ein Federelement, vorzugsweise die Luftfeder eines Nutzfahrzeuges, festlegbar ist. Der Tragabschnitt weist vorzugsweise einen ebenen bzw. plattenförmigen Bereich auf, in welchem die Luftfeder auf das Lenkerelement aufsetzbar ist. Dabei dient der Tragabschnitt der Kraftübertragung zwischen der Luftfeder und dem Lenkerelement, wobei das Lenkerelement diese Kraft weiter auf das Achsrohr überträgt, um dieses gegenüber dem Rahmen des Nutzfahrzeuges abzustützen. Mit Vorteil weist das erste Lenkerteil eine erste Hälfte des Tragabschnitts auf und das zweite Lenkerteil eine zweite Hälfte des Tragabschnitts. Es ist auf diese Weise eine gewisse Redundanz der Festlegung einer Luftfeder an dem Lenkerelement erreichbar, wobei bei Ausfall eines der Lenkerteile immer noch das andere Lenkerteil zur Verfügung steht, um die Luftfeder zumindest temporär abzustützen und einen Totalausfall des Achslenkers zu verhindern.

Weiterhin erfindungsgemäß ist ein Verfahren zur Herstellung eines an einem Achsrohr festgelegten Achslenkers vorgesehen, bei welchem zunächst ein Verbindungselement, ein Lenkerelement und ein Achsrohr bereitgestellt werden, wobei das Verbindungselement am Lenkerelement derart angeordnet wird, dass ein zweiter Verbindungsabschnitt des Verbindungselements mit einer Achsöffnung am Lenkerelement im Wesentlichen fluchtet, wobei ein erster Verbindungsabschnitt des Verbindungselements am Lenkerelement festgelegt wird, wobei das Achsrohr in die Achsöffnung und den zweiten Verbindungsabschnitt eingeführt wird, und wobei der zweite Verbindungsabschnitt am Achsrohr festgelegt wird. Besonders bevorzugt werden die Verfahrensschritte des Herstellungsverfahrens für einen Achslenker in der hier beschriebenen Reihenfolge durchgeführt. Das hier vorgeschlagene Verfahren vereinfacht die Herstellung eines Achslenkers und erhöht auch die Präzision der zueinander angeordneten und aneinander festgelegten Bauteilen. So kann zunächst das Verbindungselement am Lenkerelement in der richtigen Position angeordnet werden und zunächst mit einer ersten Schweißverbindung in dieser Position gehalten werden. Mit Vorteil ist dabei ein zweiter Verbindungsabschnitt des Verbindungselements derart fluchtend zu einer Achsöffnung am Lenkerelement ausgerichtet, dass ein Achsrohr in den zweiten Verbindungsabschnitt und die Achsöffnung einführbar ist. Die Formulierung im Wesentlichen fluchtend schließt dabei auch Anordnungen der Bauteile zueinander ein, welche aufgrund einer größeren Passung zwischen dem zweiten Verbindungsabschnitt und der Achsöffnung mit einem Winkel von 2° bis 6° von der mathematisch fluchtenden Anordnung abweichen. Die bevorzugte Schweißverbindung zwischen dem Verbindungselement und dem Lenkerelement wird vorzugsweise in einem ersten Verbindungsabschnitt des Verbindungselements hergestellt. Im bevorzugten Fall, dass das Lenkerelement ein erstes Lenkerteil und ein zweites Lenkerteil aufweist, wird zunächst das erste Lenkerteil mit dem Verbindungselement verschweißt und anschließend das zweite Lenkerteil. Vorteilhafterweise wird, nachdem das Achsrohr in die Achsöffnung und den zweiten Verbindungsabschnitt eingeführt wurde und richtig positioniert wurde, das Achsrohr im zweiten Verbindungsabschnitt festgeschweißt.

Erfindungsgemäß wird das Achsrohr kraftschlüssig und stoffschlüssig am zweiten Verbindungsabschnitt festgelegt. Dabei wird die kraftschlüssige Verbindung vorteilhafterweise durch elastisches Verformen des Verbindungselements im zweiten Verbindungsabschnitt erreicht. Erfindungsgemäß wird nachdem das Achsrohr in den zweiten Verbindungsabschnitt eingesetzt wurde bzw. eingeschoben wurde, zunächst die kraftschlüssige Verbindung zwischen dem zweiten Verbindungsabschnitt und dem Achsrohr hergestellt und anschließend um eine stoffschlüssige Verbindung ergänzt. Die stoffschlüssige Verbindung wird dabei erfindungsgemäß in einem am zweiten Verbindungsabschnitt vorgesehenen Schweißfenster hergestellt. Auf diese Weise lässt sich nach Einführen des Achsrohres dieses zunächst in der richtigen Position kraftschlüssig am Lenkerelement festlegen, wobei anschließend eine Schweißverbindung herstellbar ist. Vorteilhaft ist diese Vorgehensweise, da die Herstellung des Kraftschlusses für einen Monteur des Achslenkers auch einhändig möglich ist, wobei er mit der anderen Hand jeweils das Achsrohr halten und in die richtige Position bringen kann. Die Kombination einer kraftschlüssigen und einer stoffschlüssigen Festlegung des Verbindungselements am Achsrohr erhöht weiterhin bevorzugt die Festigkeit der Verbindung zwischen Achsrohr und Verbindungselement, da nicht nur die aneinander haftenden bzw. reibenden Flächen der beiden Bauteile diese aneinander festlegen, sondern zusätzlich auch eine stoffschlüssige Verbindung in Form einer Schweißnaht zwischen beiden Teilen herstellbar ist. Die Festigkeit des Achslenkers in Verbindung mit dem Achsrohr ist dabei vorzugsweise besonders hoch.

Besonders bevorzugt wird vor der Festlegung des Achsrohres am zweiten Verbindungsabschnitt der zweite Verbindungsabschnitt bereichsweise am Lenkerelement stoffschlüssig festgelegt. Neben der Schweißverbindung zwischen dem Lenkerelement und dem Verbindungselement im ersten Verbindungsabschnitt kann es bevorzugt sein, dass auch im zweiten Verbindungsabschnitt bereichsweise eine Schweißverbindung mit dem Lenkerelement hergestellt wird. Hierbei muss lediglich darauf geachtet werden, dass eine elastische Restverformbarkeit des zweiten Verbindungsabschnitts bleibt, um das Achsrohr kraftschlüssig am zweiten Verbindungsabschnitt festzulegen. Als Vorteil aus der stoffschlüssigen Verbindung des zweiten Verbindungsabschnitts mit dem Lenkerelement ist eine weiterhin gesteigerte Festigkeit des Achslenkers zu nennen.

Erfindunsgemäß weist das Verbindungselement im zweiten Verbindungsabschnitt ein Schweißfenster auf, wobei eine stoffschlüssige Verbindung zwischen dem Verbindungselement und dem Achsrohr im Schweißfenster hergestellt wird. Mit Vorteil wird die stoffschlüssige Verbindung zwischen dem Verbindungselement und dem Achsrohr ausschließlich im Schweißfenster hergestellt. Weiterhin bevorzugt können mehrere Schweißfenster, mit Vorteil zwei Schweißfenster, an dem Verbindungselement vorgesehen sein. Es hat sich gezeigt, dass die Ausbildung einer Schweißnaht zwischen dem Verbindungselement und dem Achsrohr in Form eines Schweißfensters höhere Festigkeitswerte erzielt als ein Rundumverschweißen des Achsrohres entlang seines gesamten Umfangs. Dabei wird insbesondere die Festigkeit des Achsrohres durch die im Schweißfenster hergestellte Schweißverbindung weniger geschwächt als dies in herkömmlichen Schweißverbindung zwischen einem Achslenker und einem Achsrohr der Fall ist.

Weitere Vorteile und Merkmale der vorliegenden Erfindung ergeben sich aus der nachfolgenden Beschreibung mit Bezug auf die beigefügten Figuren. Es versteht sich dabei, dass einzelne in nur einzelnen Figuren gezeigte Merkmale auch in anderen Ausführungsformen anderer Figuren Anwendung finden können, sofern dies nicht explizit ausgeschlossen wurde oder sich aufgrund technischer Gegebenheiten verbietet. Es zeigen:
- Fig. 1: eine perspektivische Ansicht einer bevorzugten Ausführungsform des erfindungsgemäßen Achslenkers,
- Fig. 2: eine weitere perspektivische Ansicht einer bevorzugten Ausführungsform des erfindungsgemäßen Achslenkers mit darin angeordnetem Achsrohr,
- Fig. 3: eine teilweise geschnittene Seitenansicht einer bevorzugten Ausführungsform des erfindungsgemäßen Achslenkers.

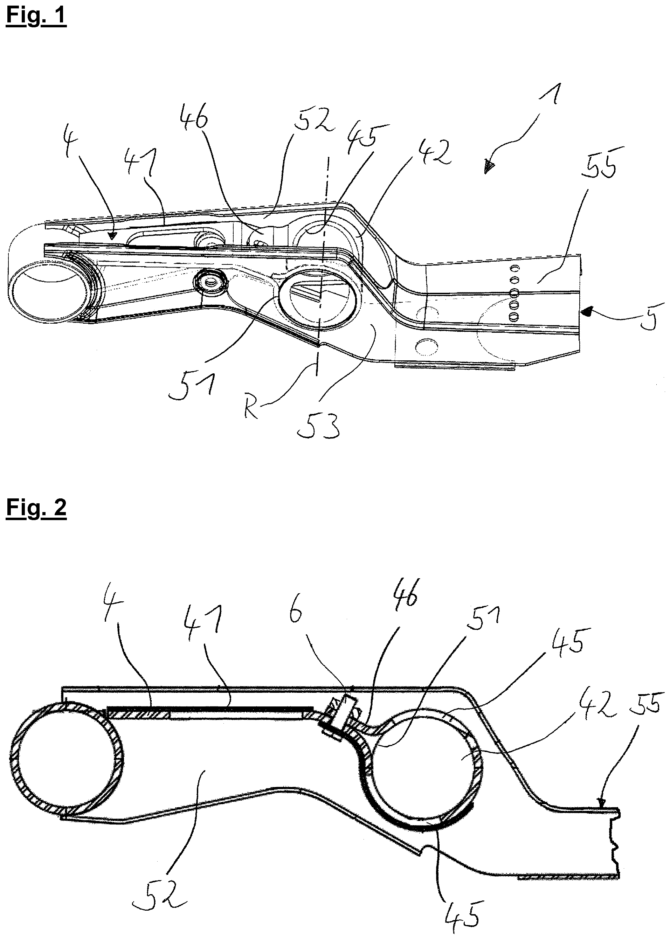

Der in Fig. 1 dargestellte Achslenker 1 weist ein Lenkerelement 5 auf, welches sich aus einem ersten Lenkerteil 52 und aus einem zweiten Lenkerteil 53 zusammensetzt. Weiterhin weist der Achslenker 1 ein Verbindungselement 4 auf, welches vorzugsweise in einem ersten Verbindungsabschnitt 41 mit dem Lenkerelement 5 verschweißt ist. In der in Fig. 1 gezeigten Ausführungsform weist das Verbindungselement 4 vorzugsweise zwei erste Verbindungsabschnitte 41 auf, wobei einer der ersten Verbindungsabschnitte 41 mit dem ersten Lenkerteil 52 verschweißt ist und ein zweiter erster Verbindungsabschnitt 41 (nicht gezeigt) mit dem zweiten Lenkerteil 53 verschweißt ist. Das Verbindungselement 4 weist weiterhin einen zweiten Verbindungsabschnitt 42 auf, welcher vorzugsweise ringförmig gekrümmt ausgebildet ist, um ein Achsrohr 2 (nicht gezeigt) zu umschließen und vorzugsweise zumindest kraftschlüssig festzulegen. Weiterhin weist der zweite Verbindungsabschnitt 42 zumindest ein Schweißfenster 45 auf, wobei die in Fig. 1 dargestellte Ausführungsform zwei Schweißfenster 45 aufweist. Das Verbindungselement 4 weist weiterhin einen Zugbereich 46 auf, in welchem ein Zugelement 6 (nicht gezeigt) anordenbar ist, um eine Zugkraft auf den Zugbereich 46 zu übertragen. Durch die Kraft auf den Zugbereich 46 wird der zweite Verbindungsabschnitt 42 des Verbindungselements 4 vorzugsweise derart elastisch verformt, dass der vom zweiten Verbindungsabschnitt 42 umschlossene Raum verengt wird. Auf diese Weise kann der zweite Verbindungsabschnitt 42 kraftschlüssig an einem Achsrohr 2 festgelegt werden. Mit Vorteil ist im Bereich des Schweißfensters 45, besonders bevorzugt im Bereich beider Schweißfenster 45, eine Schweißverbindung zu dem Achsrohr 2 (nicht gezeigt) hergestellt. Das Lenkerelement 5 weist vorzugsweise einen Tragabschnitt 55 auf. Am Tragabschnitt 55 ist ein Federelement, vorzugsweise die Luftfeder eines Nutzfahrzeuges am Lenkerelement 5 festlegbar. Weiterhin bevorzugt weisen jeweils das erste Lenkerteil 52 und das zweite Lenkerteil 53 eine Hälfte des Tragabschnitts 55 auf. Besonders bevorzugt ist an der Naht, an der die Lenkerteile 52 und 53 einander berühren, eine Schweißnaht ausgebildet, um die Lenkerteile 52, 53 aneinander festzulegen. An der in der Figur links gezeigten Seite weist der Achslenker 1 vorzugsweise ein buchsenförmiges Teil auf, mit welchem der Achslenker 1 drehbar an dem Lagerbock eines Rahmens eines Nutzfahrzeuges festlegbar ist. Besonders bevorzugt ist dabei das buchsenförmige Teil sowohl mit dem ersten Lenkerteil 52, als auch mit dem zweiten Lenkerteil 53 verschweißt. Besonders bevorzugt kann auch das Verbindungselement 4 an dem buchsenförmigen Lagerteil festgeschweißt sein.

Bei der in Fig. 2 gezeigten bevorzugten Ausführungsform des erfindungsgemäßen Achslenkers 1 ist vom Lenkerelement 5 nur das erste Lenkerteil 52 dargestellt, um den Blick auf das Verbindungselement 4 freizugeben. Dabei ist insbesondere der zweite Verbindungsabschnitt 42 sowie die am Lenkerelement 5 bzw. am ersten Lenkerteil 52 vorgesehene Achsöffnung 51 erkennbar. Das Zugelement 6 ist vorzugsweise als Bolzen ausgebildet, wobei eine Mutter zum Verspannen des Bolzens gegen den Zugbereich 46 des Verbindungselements 4 vorgesehen ist. Die fett und schwarz markierten Bereiche des ersten Verbindungsabschnitts 41 und des zweiten Verbindungsabschnitts 42 sind Schweißnähte mit dem Lenkerelement 5, welche in der bevorzugten Reihenfolge des erfindungsgemäßen Verfahrens hergestellt sind. Weiterhin sind die Schweißfenster 45 gezeigt, in welchen eine Schweißverbindung zwischen dem Achsrohr (nicht gezeigt) und dem zweiten Verbindungsabschnitt 42 herstellbar ist.

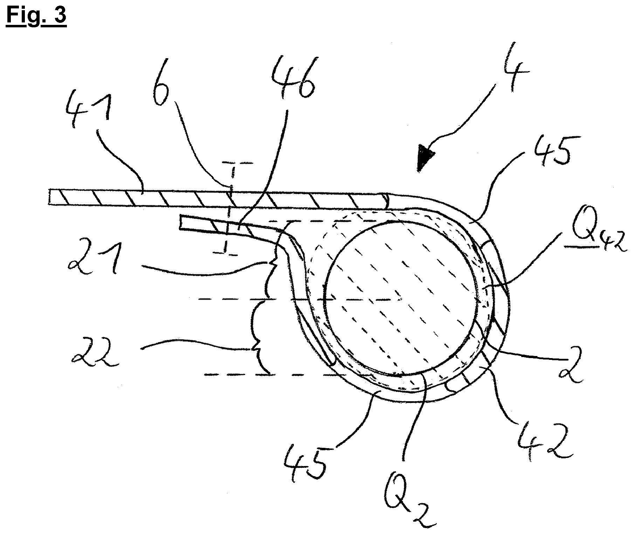

Die in Fig. 3 gezeigte geschnittene Ansicht des Verbindungselements 4 und des Achsrohres 2 verdeutlicht insbesondere die Querschnittsfläche Q₄₂ des vom zweiten Verbindungsabschnitt 42 umschlossenen Volumens im Verhältnis zur kleineren Querschnittsfläche Q₂ des Achsrohres 2. Auf diese Weise ist das Achsrohr 2 mit einem gewissen Spiel in den zweiten Verbindungsabschnitt 42 einfügbar. Um die von dem Achsrohr 2 auf das Lenkerelement 4 übertragene Kraft besonders gleichmäßig und mit günstigem Kraftfluss auf das Lenkerelement 5 zu verteilen, umfängt im vorliegenden Beispiel das Lenkerelement 4 im zweiten Verbindungsabschnitt 42, das Achsrohr 2 im Uhrzeigersinn. Anders als in den in Fig. 1 und 2 dargestellten Ausführungsformen, wird somit gewährleistet, dass auf der Oberseite des Verbindungselements 4 das Material des Verbindungselements 4 durchgehend ist, um die vom Achsrohr 2 auf das Verbindungselement 4, nach oben wirkende Kraft, besonders günstig in das Verbindungselement 4 und somit auch in das Lenkerelement 5 einzuleiten. Weiterhin ist verdeutlicht, dass das Achsrohr 2 auf seiner Oberseite eine Druckhälfte 21 aufweist und auf seiner Unterseite in der Figur eine Zughälfte 22. Besonders bevorzugt ist es, dass das eine Schweißfenster 45 oder die vorzugsweise Vielzahl von Schweißfenstern 45 des Verbindungselements 4 jeweils entweder in der Druckhälfte 21 oder in der Zughälfte 22 angeordnet sind. Auf diese Weise können Schubspannungen im Bereich der Schweißnaht vermieden werden. Im Zugbereich 46 des Verbindungselements 4 greift vorzugsweise ein Zugelement 6 ein, um den zweiten Verbindungsbereich 42 gegen das Achsrohr 2 zu zwingen. In der in Fig. 3 dargestellten Ausführungsform ist das Verbindungselement 4 vorzugsweise in seinem ersten Zustand dargestellt, wobei durch Zusammenziehen des Zugelements 6 eine Verengung des zweiten Verbindungsabschnitts 42 möglich ist und der Achslenker 1 insbesondere das Verbindungselement 4 vorzugsweise somit in den zweiten Zustand versetzbar ist.

### Bezugszeichen:

- 2: - Achsrohr
- 4: - Verbindungselement
- 5: - Lenkerelement
- 6: - Zugelement
- 21: - Druckhälfte
- 22: - Zughälfte
- 41: - erster Verbindungsabschnitt
- 42: - zweiter Verbindungsabschnitt
- 45: - Schweißfenster
- 46: - Zugbereich
- 51: - Achsöffnung
- 52: - erstes Lenkerteil
- 53: - zweites Lenkerteil
- 55: - Tragabschnitt
- Q₄₂: - Querschnittsfläche zweiter Verbindungsabschnitt
- Q₂: - Querschnittsfläche Achsrohr

## Patentansprüche

1. Verbund aus einem Achslenker (1) und einem Achsrohr (2) eines Nutzfahrzeuges,
wobei der Achslenker (1) ein Verbindungselement (4) und zumindest ein Lenkerelement (5) umfasst,
wobei das Verbindungselement (4) einen ersten Verbindungsabschnitt (41) aufweist, in welchem eine Schweißverbindung zum Lenkerelement (5) herstellbar ist,
wobei das Verbindungselement (4) einen zweiten Verbindungsabschnitt (42) aufweist, in welchem eine Schweißverbindung zu dem Achsrohr (2) herstellbar ist,
wobei der zweite Verbindungsabschnitt (42) ausgelegt ist, das Achsrohr (2) zu umgreifen,
wobei ein Anschlussbereich als eine als Lagerauge ausgebildete Aufnahmegeometrie des Achslenkers (1) zur schwenkbaren Lagerung des Achslenkers (1) an einem Rahmen des Fahrzeugs ausgebildet ist,
wobei sich der erste Verbindungsabschnitt (41) in einem sich plattenförmig und im Wesentlichen eben erstreckenden Bereich des Verbindungselements (4) befindet, der sich zwischen dem Anschlussbereich am Rahmen des Nutzfahrzeugs und dem Achsrohr (2) erstreckt,
wobei das Verbindungselement (4) in einem ersten Zustand ein Übermaß bezogen auf die Außenkonfiguration des Achsrohres (2) aufweist und im ersten Zustand das Verbindungselement (4) eine erste Querschnittsfläche (Q₄₂) des vom zweiten Verbindungsabschnitt (42) umgriffenen Volumens aufweist, wobei ein Zugelement (6) vorgesehen ist um den zweiten Verbindungsabschnitt (42) zu verformen;
wobei das Verbindungselement (4) einen Zugbereich (46) aufweist, mit welchem ein Zugelement (6) in Eingriff bringbar ist, um den zweiten Verbindungsabschnitt (42) derart zu verengen, dass die erste Querschnittsfläche (Q₄₂) verkleinert ist.

2. Verbund aus Achslenker (1) und Achsrohr (2) nach Anspruch 1,
wobei das Verbindungselement (4) im zweiten Verbindungsabschnitt (42) ein Schweißfenster (45) aufweist, welches als Aussparung ausgebildet ist und in welchem die Schweißverbindung zwischen dem Verbindungselement (4) und dem Achsrohr (2) herstellbar ist.

3. Verbund aus Achslenker (1) und Achsrohr (2) nach einem der vorhergehenden Ansprüche,
wobei im ersten Zustand des Verbindungselements (4) die erste Querschnittsfläche (Q₄₂) ein 1,02- bis 1,3-faches, bevorzugt ein 1,05- bis 1,15-faches und besonders bevorzugt 1,1- bis 1,15-faches einer zweiten Querschnittsfläche (Q₂) der Außenkonfiguration des Achsrohres (2) im Bereich des zweiten Verbindungsabschnittes (42) ist.

4. Verbund aus Achslenker (1) und Achsrohr (2) nach einem der vorhergehenden Ansprüche,
wobei im ersten Zustand des Verbindungselements (4) die erste Querschnittsfläche (Q₄₂) ein 1,05- bis 1,15-faches und besonders bevorzugt 1,1- bis 1,15-faches einer zweiten Querschnittsfläche (Q₂) der Außenkonfiguration des Achsrohres (2) im Bereich des zweiten Verbindungsabschnittes (42) ist.

5. Verbund aus Achslenker (1) und Achsrohr (2) nach einem der vorhergehenden Ansprüche,
wobei im ersten Zustand des Verbindungselements (4) die erste Querschnittsfläche (Q₄₂) ein 1,1- bis 1,15-faches einer zweiten Querschnittsfläche (Q₂) der Außenkonfiguration des Achsrohres (2) im Bereich des zweiten Verbindungsabschnittes (42) ist.

6. Verbund aus Achslenker (1) und Achsrohr (2) nach einem der vorhergehenden Ansprüche,
wobei das Zugelement (6) als Bolzen ausgebildet ist und eine Mutter zum Verspannen des Bolzens gegen den Zugbereich (46) des Verbindungselements (4) vorgesehen ist.

7. Verbund aus Achslenker (1) und Achsrohr (2) nach einem der vorhergehenden Ansprüche,
wobei das Zugelement (6) eine Kraft auf das Verbindungselement (4) derart überträgt, dass eine im Wesentlichen parallel zum Umfang des Achsrohres (2) verlaufende Zugkraft im zweiten Verbindungsabschnitt (42) wirkt.

8. Verbund aus Achslenker (1) und Achsrohr (2) nach einem der vorhergehenden Ansprüche,
wobei das Verbindungselement (4) in einem zweiten Zustand gegenüber dem Achsrohr (2) vorgespannt ist.

9. Verbund aus Achslenker (1) und Achsrohr (2) nach Anspruch 2 und Anspruch 8,
wobei das Verbindungselement (4) im zweiten Zustand im Bereich des Schweißfensters (45) mit dem Achsrohr (2) verschweißt ist.

10. Verbund aus Achslenker (1) und Achsrohr (2) nach Anspruch 2 sowie einem der Ansprüche 8 oder 9,
wobei das Schweißfenster (45) derart am Verbindungselement (4) angeordnet ist, dass es auf einer Druckhälfte (21) oder einer Zughälfte (22) des Achsrohres (2) festlegbar ist.

11. Verbund aus Achslenker (1) und Achsrohr (2) nach einem der Ansprüche 8 bis 10,
wobei das Verbindungselement (4) im zweiten Zustand im Bereich des zweiten Verbindungsabschnitts (42) mit dem Lenkerelement (5) verschweißt ist.

12. Verbund aus Achslenker (1) und Achsrohr (2) nach einem der vorhergehenden Ansprüche,
wobei das Lenkerelement (5) eine Achsöffnung (51) aufweist,
wobei die Achsöffnung (51) ein Übermaß gegenüber der Außengeometrie des Achsrohrs (2) aufweist,
wobei das Achsrohr (2) mit Spiel in die Achsöffnung (51) einführbar ist.

13. Verbund aus Achslenker (1) und Achsrohr (2) nach einem der vorhergehenden Ansprüche,
wobei das Lenkerelement (5) ein erstes Lenkerteil (52) und ein zweites Lenkerteil (53) umfasst,
wobei das erste und das zweite Lenkerteil (52, 53) an gegenüberliegenden Seiten des Verbindungselements (4) mit diesem verschweißbar sind.

14. Verfahren zur Herstellung eines an einem Achsrohr (2) festgelegten Achslenkers (1) umfassend die Schritte:
a) Bereitstellen eines Verbindungselements (4), eines Lenkerelements (5) und eines Achsrohres (2),
b) Anordnen des Verbindungselements (4) am Lenkerelement (5) derart, dass ein zweiter Verbindungsabschnitt (42) des Verbindungselements (4) mit einer Achsöffnung (51) am Lenkerelement (5) im Wesentlichen fluchtet,
c) Festlegen eines ersten Verbindungsabschnitts (41) des Verbindungselements (4) am Lenkerelement (5),
d) Einführen des Achsrohres (2) in die Achsöffnung (51) und den zweiten Verbindungsabschnitt (42), wobei der zweite Verbindungsabschnitt (42) in einem ersten Zustand ein Übermaß bezogen auf die Außenkonfiguration des Achsrohres (2) aufweist,
wobei das Verbindungselement (4) im zweiten Verbindungsabschnitt (42) ein Schweißfenster (45) aufweist,
e) wobei zunächst eine kraftschlüssige Verbindung zwischen dem Achsrohr (2) und dem zweiten Verbindungsabschnitt (42) mittels eines in einem Zugbereich des Verbindungselements (4) eingreifenden Zugelements (6) hergestellt wird und
f) anschließend ein stoffschlüssiges Festlegen des zweiten Verbindungsabschnitts (42) am Achsrohr (2) im Schweißfenster (45) erfolgt.

15. Verfahren nach Anspruch 14,
wobei vor der Festlegung des Achsrohres (2) am zweiten Verbindungsabschnitt (42), der zweite Verbindungsabschnitt (42) bereichsweise am Lenkerelement (5) stoffschlüssig festgelegt wird.

## Claims

1. Composite of an axle control arm (1) and an axle tube (2) of a commercial vehicle,
wherein the axle control arm (1) comprises a connecting element (4) and at least one steering element (5),
wherein the connecting element (4) has a first connecting section (41) in which a welded connection to the handlebar element (5) can be produced,
wherein the connecting element (4) has a second connecting section (42) in which a welded connection to the axle tube (2) can be produced,
wherein the second connecting portion (42) is adapted to embrace the axle tube (2),
wherein a connection region is designed as a mounting geometry of the axle control arm (1) in the form of a bearing eye on a frame of the vehicle, for the pivotable bearing of the axle control arm (1),
wherein the first connecting section (41) is located in a plate-shaped and substantially flat region of the connecting element (4), which extends between the connection region on the frame of the commercial vehicle and the axle tube (2),
wherein the connecting element (4) in a first state has an oversize relative to the outer configuration of the axle tube (2) and in the first state, the connecting element (4) has a first cross-sectional area (Q42) of the volume encompassed by the second connecting section (42),
wherein a tension element (6) is provided to deform the second connecting portion (42);
wherein the connecting element (4) has a pulling region
(46), with which a tension element (6) can be brought into engagement in order to narrow the second connecting section (42) in such a way that the first cross-sectional area (042) is reduced.

2. Composite of axle control arm (1) and axle tube (2) according to claim 1, wherein the connecting element (4) in the second connecting section (42) has a welding window (45), which is formed as a recess and in which the welded connection between the connecting element (4) and the axle tube (2) can be produced.

3. Composite of axle control arm (1) and axle tube (2) according to one of the preceding claims,
wherein, in the first state of the connecting element (4), the first cross-sectional area (042) is 1.02 to 1.3 times, preferably 1.05 to 1.15 times and particularly preferably 1.1 to 1.15 times a second cross-sectional area (Q2) of the outer configuration of the axle tube (2) in the region of the second connecting section (42).

4. Composite of axle control arm (1) and axle tube (2) according to one of the preceding claims,
wherein, in the first state of the connecting element (4), the first cross-sectional area (Q42) is 1.05 to 1.15 times and particularly preferably 1.1 to 1.15 times a second cross-sectional area (Q2) of the outer configuration of the axle tube (2) in the region of the second connecting section (42).

5. Composite of axle control arm (1) and axle tube (2) according to one of the preceding claims,
wherein, in the first state of the connecting element (4), the first cross-sectional area (Q42) is 1.1 to 1.15 times a second cross-sectional area (Q2) of the outer configuration of the axle tube (2) in the region of the second connecting section (42).

6. Composite of axle control arm (1) and axle tube (2) according to one of the preceding claims,
wherein the tension element (6) is designed as a bolt and a nut is provided for bracing the bolt against the tension region (46) of the connecting element (4).

7. Composite of axle control arm (1) and axle tube (2) according to one of the preceding claims,
wherein the tension element (6) transmits a force to the connecting element (4) in such a way that a tensile force running essentially parallel to the circumference of the axle tube (2) acts in the second connecting section (42).

8. Composite of axle control arm (1) and axle tube (2) according to one of the preceding claims,
wherein the connecting element (4), in a second state, is pretensioned opposite from the axle tube (2).

9. Composite of axle control arm (1) and axle tube (2) according to claim 2 and claim 8,
wherein, in a second state, the connecting element (4) is welded to the axle tube (2) in the area of the welding window (45).

10. Composite of axle control arm (1) and axle tube (2) according to claim 2 and one of claims 8 or 9,
wherein the welding window (45) is arranged at the connecting element (4) in such a way that it can be determined on a pressure half (21) or a tension half (22) of the axle tube (2).

11. Composite of axle control arm (1) and axle tube (2) according to one of claims 8 to 10,
wherein the connecting element (4), in the second state, is welded to the handlebar element (5) in the area of the second connecting section (42).

12. Composite of axle control arm (1) and axle tube (2) according to one of the preceding claims,
wherein the handlebar element (5) has an axle opening (51),
wherein the axle opening (51) has an oversize relative to the outer geometry of the axle tube (2),
wherein the axle tube (2) can be inserted into the axle opening (51) with clearance.

13. Composite of axle control arm (1) and axle tube (2) according to one of the preceding claims,
wherein the handlebar element (5) comprises a first handlebar part (52) and a second handlebar part (53),
wherein the first and second handlebar parts (52, 53) can be welded to the connecting element (4) on opposite sides thereof.

14. A method of manufacturing an axle control arm (1) fixed to an axle tube (2) comprising the steps of:
a) Providing a connecting element (4), a handlebar element (5) and an axle tube (2),
b) Arrangement of the connecting element (4) on the handlebar element (5) in such a way that a second connecting section (42) of the connecting element (4) is substantially aligned with an axle opening (51) on the handlebar element (5),
c) Fixing a first connecting section (41) of the connecting element (4) to the handlebar element (5),
d) Inserting the axle tube (2) into the axle opening (51) and the second connecting section (42),
wherein the second connecting section (42), in a first state, has an oversize relative to the outer configuration of the axle tube (2),
wherein the connecting element (4) has a welding window (45) in the second connecting section (42),
e) wherein, at first, a force-locking connection is produced between the axle tube (2) and the second connecting section (42) by means of a tension element (6) engaging in a tension region of the connecting element (4), and
f) the second connecting section (42) is then fixed material-locked to the axle tube (2) in the welding window (45).

15. Method according to claim 14,
wherein, before the axle tube (2) is determined to the second connecting section (42), the second connecting section (42) is determined to the handlebar element (5) with a material bond in certain areas.

## Revendications

1. Assemblage d'un bras de suspension (1) et d'un tube d'essieu (2) d'un véhicule utilitaire,
dans lequel
le bras de suspension (1) comprend un élément de liaison (4) et au moins un élément formant bras (5),
l'élément de liaison (4) présente une première portion de liaison (41) dans laquelle une liaison soudée peut être réalisée avec l'élément formant bras (5),
l'élément de liaison (4) présente une deuxième portion de liaison (42) dans laquelle une liaison soudée peut être réalisée avec le tube d'essieu (2),
la deuxième portion de liaison (42) est conçue pour entourer le tube d'essieu (2),
une zone de raccordement est réalisée sous la forme d'une géométrie de réception du bras de suspension (1), conçue comme un oeillet de palier, pour le montage pivotant du bras de suspension (1) sur un châssis du véhicule,
la première portion de liaison (41) se trouve dans une zone de l'élément de liaison (4) s'étendant en forme de plaque sensiblement plane, qui s'étend entre la zone de raccordement au châssis du véhicule utilitaire et le tube d'essieu (2),
l'élément de liaison (4) présente, dans un premier état, une sur-dimension par rapport à la configuration extérieure du tube d'essieu (2), et l'élément de liaison (4) présente, dans le premier état, une première surface de section transversale (Q₄₂) du volume entouré par la deuxième portion de liaison (42),
il est prévu un élément de traction (6) pour déformer la deuxième portion de liaison (42) ;
l'élément de liaison (4) présente une zone de traction (46) avec laquelle un élément de traction (6) peut être amené en prise, afin de rétrécir la deuxième portion de liaison (42) de telle sorte que la première surface de section transversale (Q₄₂) est réduite.

2. Assemblage d'un bras de suspension (1) et d'un tube d'essieu (1) selon la revendication 1,
dans lequel l'élément de liaison (4) présente, dans la deuxième portion de liaison (42), une fenêtre de soudage (45) qui est conçue comme un évidement et dans laquelle la liaison soudée entre l'élément de liaison (4) et le tube d'essieu (2) peut être réalisée.

3. Assemblage d'un bras de suspension (1) et d'un tube d'essieu (2) selon l'une des revendications précédentes,
dans lequel, dans le premier état de l'élément de liaison (4), la première surface de section transversale (Q₄₂) est de 1,02 à 1,3 fois, de préférence de 1,05 à 1,15 fois et de manière particulièrement préférée de 1,1 à 1,15 fois une deuxième surface de section transversale (Q₂) de la configuration extérieure du tube d'essieu (2) dans la zone de la deuxième portion de liaison (42).

4. Assemblage d'un bras de suspension (1) et d'un tube d'essieu (2) selon l'une des revendications précédentes,
dans lequel, dans le premier état de l'élément de liaison (4), la première surface de section transversale (Q₄₂) est de 1,05 à 1,15 fois et de manière particulièrement préférée de 1,1 à 1,15 fois une deuxième surface de section transversale (Q₂) de la configuration extérieure du tube d'essieu (2) dans la zone de la deuxième portion de liaison (42).

5. Assemblage d'un bras de suspension (1) et d'un tube d'essieu (2) selon l'une des revendications précédentes,
dans lequel, dans le premier état de l'élément de liaison (4), la première surface de section transversale (Q₄₂) est de 1,1 à 1,15 fois une deuxième surface de section transversale (Q₂) de la configuration extérieure du tube d'essieu (2) dans la zone de la deuxième portion de liaison (42).

6. Assemblage d'un bras de suspension (1) et d'un tube d'essieu (2) selon l'une des revendications précédentes,
dans lequel l'élément de traction (6) est conçu comme un boulon, et
il est prévu un écrou pour serrer le boulon contre la zone de traction (46) de l'élément de liaison (4).

7. Assemblage d'un bras de suspension (1) et d'un tube d'essieu (2) selon l'une des revendications précédentes,
dans lequel l'élément de traction (6) transmet une force à l'élément de liaison (4) de telle sorte qu'une force de traction, sensiblement parallèle à la circonférence du tube d'essieu (2), agit dans la deuxième portion de liaison (42).

8. Assemblage d'un bras de suspension (1) et d'un tube d'essieu (2) selon l'une des revendications précédentes,
dans lequel, dans un deuxième état, l'élément de liaison (4) est précontraint par rapport au tube d'essieu (2).

9. Assemblage d'un bras de suspension (1) et d'un tube d'essieu (2) selon la revendication 2 et la revendication 8,
dans lequel, dans le deuxième état, l'élément de liaison (4) est soudé au tube d'essieu (2) dans la zone de la deuxième fenêtre de soudage (45).

10. Assemblage d'un bras de suspension (1) et d'un tube d'essieu (2) selon la revendication 2 et l'une des revendications 8 ou 9,
dans lequel la fenêtre de soudage (45) est disposée sur l'élément de liaison (4) de manière à pouvoir être fixée sur une moitié de compression (21) ou sur une moitié de traction (22) du tube d'essieu (2).

11. Assemblage d'un bras de suspension (1) et d'un tube d'essieu (2) selon l'une des revendications 8 à 10,
dans lequel, dans le deuxième état, l'élément de liaison (4) est soudé à l'élément formant bras (5) dans la zone de la deuxième portion de liaison (42).

12. Assemblage d'un bras de suspension (1) et d'un tube d'essieu (2) selon l'une des revendications précédentes,
dans lequel l'élément formant bras (5) présente une ouverture d'essieu (51),
l'ouverture d'essieu (51) présente une sur-dimension par rapport à la géométrie extérieure du tube d'essieu (2),
le tube d'essieu (2) peut être introduit avec jeu dans l'ouverture d'essieu (51).

13. Assemblage d'un bras de suspension (1) et d'un tube d'essieu (2) selon l'une des revendications précédentes,
dans lequel l'élément formant bras (5) comprend une première partie de bras (52) et une deuxième partie de bras (53),
les première et deuxième parties de bras (52, 53) peuvent être soudées à l'élément de liaison (4) sur des côtés opposés de celui-ci.

14. Procédé de fabrication d'un bras de suspension (1) fixé à un tube d'essieu (2), comprenant les étapes consistant à :
a) fournir un élément de liaison (4), un élément formant bras (5) et un tube d'essieu (2),
b) disposer l'élément de liaison (4) sur l'élément formant bras (5) de telle sorte qu'une deuxième portion de liaison (42) de l'élément de liaison (4) soit sensiblement alignée avec une ouverture d'essieu (51) dans l'élément formant bras (5),
c) fixer une première portion de liaison (41) de l'élément de liaison (4) à l'élément formant bras (5),
d) insérer le tube d'essieu (2) dans l'ouverture d'essieu (51) et dans la deuxième portion de liaison (42), la deuxième portion de liaison (42) présentant, dans un premier état, une sur-dimension par rapport à la configuration extérieure du tube d'essieu (2),
l'élément de liaison (4) présentant une fenêtre de soudage (45) dans la deuxième portion de liaison (42),
e) établir tout d'abord une liaison par coopération de force entre le tube d'essieu (2) et la deuxième portion de liaison (42) au moyen d'un élément de traction (6) qui s'engage dans une zone de traction de l'élément de liaison (4), et
f) ensuite, procéder à une fixation par coopération de matière de la deuxième portion de liaison (42) sur le tube d'essieu (2) dans la fenêtre de soudage (45).

15. Procédé selon la revendication 14,
dans lequel, avant la fixation du tube d'essieu (2) sur la deuxième portion de liaison (42), la deuxième portion de liaison (42) est fixée localement sur l'élément formant bras (5) par coopération de matière.
